# EUROPÄISCHE PATENTANMELDUNG

(11) **EP 4 764 354 A1**
(43) Veröffentlichungstag der Anmeldung: **24.06.2026**
(21) Anmeldenummer: 25223896.9
(22) Anmeldetag: 16.12.2025
(51) Int. Cl.: F24S 25/636

(54) **BEFESTIGUNGSVORRICHTUNG FÜR EINE PROFILSTANGE**

(30) Priorität: 19.12.2024 AT 5019424 U
(71) Anmelder: PREFA Aluminiumprodukte GmbH, 3182 Marktl (AT)
(72) Erfinder: SEYRLEHNER, Christian, 3251 Purgstall an der Erlauf (AT); WEIDMANN, Martin, 3512 Bergern im Dunkelsteinerwald (AT)
(74) Vertreter: SONN Patentanwälte GmbH & Co KG

(57) **Zusammenfassung**

Eine Befestigungsvorrichtung (1) zum Festlegen einer Profilstange (11) an einem Untergrund umfasst zumindest eine Klemmeinheit (3) mit einer ersten Klemmbacke (4) und einer zweiten Klemmbacke (5), die entlang einer gemeinsamen Achse (21) relativ zueinander verschiebbar und gegeneinander verspannbar sind, und ein am Untergrund festlegbares Stützelement (2), an dem die Klemmeinheit (3) festlegbar ist.

## Beschreibung

Die vorliegende Erfindung betrifft eine Befestigungsvorrichtung zum Festlegen einer Profilstange an einem Untergrund sowie eine Anordnung von Photovoltaikmodulen auf einem Dach.

Die Erfindung ist vor allem auf das Festlegen von Profilstangen gerichtet, die an der Unterseite von Photovoltaik-Modulen angebracht sind, um die Module auf einem Dach festzulegen. Im Zuge der Energiewende werden solche Module immer zahlreicher auf Dachflächen festgelegt und in manchen Fällen bilden die Module sogar die gesamte Dachfläche aus. In dieser Hinsicht erscheint eine einfache, kostengünstige und zuverlässige sowie rasch anzuwendende Befestigungsmöglichkeit für diesen Zweck wünschenswert.

Zur Lösung dieser Aufgabe umfasst die erfindungsgemäße Befestigungsvorrichtung zumindest eine Klemmeinheit mit einer ersten Klemmbacke und einer zweiten Klemmbacke, die entlang einer gemeinsamen Achse relativ zueinander verschiebbar und gegeneinander verspannbar sind, und ein am Untergrund festlegbares Stützelement, an dem die Klemmeinheit festlegbar ist. Mit dieser Befestigungsvorrichtung können Profilstangen und insbesondere Profilstangen, die auf der Unterseite von Photovoltaik-Modulen angeordnet sind, mit den Klemmbacken festgeklemmt werden. Die Klemmeinheit wiederum wird mit dem Stützelement am Untergrund festgelegt. Es kommt somit ein standardisiertes Befestigungssystem zum Einsatz, das hinsichtlich der Klemmbacken an die jeweils auf Modulseite verwendeten Profilstangen ausgelegt ist, sodass die Festlegung der Module ohne spezielle Werkzeuge und insbesondere ohne Materialbearbeitung auf Seiten der Profistange oder am Untergrund, wie beispielsweise einer Dachfläche oder einem Dachstuhl, erfolgen kann.

Im Rahmen der Erfindung sind die erste und die zweite Klemmbacke entlang einer gemeinsamen Achse relativ zueinander verschiebbar und gegeneinander verspannbar, was bedeutet, dass für diese Relativbewegung zumindest eine der beiden Klemmbacken relativ zur anderen, vorzugsweise feststehenden, Klemmbacke verschiebbar angeordnet ist.

Gemäß einer bevorzugten Ausführungsform der vorliegenden Erfindung ist die Befestigungsvorrichtung hierbei so ausgebildet, dass das Stützelement eine am Untergrund festlegbare, bevorzugt mit dem Untergrund verschraubbare, Grundplatte und eine zur Ebene der Grundplatte abgewinkelte, und bevorzugt einteilig mit der Grundplatte ausgebildete, Stützplatte umfasst, wobei die Klemmeinheit an der Stützplatte festlegbar ist. Das Stützelement ist somit im Wesentlichen eine Winkelplatte mit zwei zueinander abgewinkelten flachen Schenkeln beziehungsweise Schenkelplatten, wobei das Stützelement jedoch in der Regel nicht aus einer einzigen Platte durch Biegen geformt wird, sondern ein gefrästes Bauteil, beispielsweise aus Aluminium, darstellt. Die Grundplatte kann flach am Untergrund aufgelegt werden und beispielsweise durch eine Schraube, die eine entsprechende Bohrung in der Grundplatte durchsetzt, am Untergrund festgelegt werden. Auf diese Weise ragt die zur Grundplatte abgewinkelte Stützplatte vom Untergrund auf und gestattet somit eine vom Untergrund beanstandete Festlegung der Klemmeinheit, sodass die Profilstange am Modul mit einem gewissen Abstand vom Untergrund von der Klemmeinheit festgehalten und über das Stützelement am Untergrund festgelegt wird. Ein Abstand vom Untergrund ist bei der Montage von Photovoltaik-Modulen in der Regel vonnöten, um die entsprechende Verkabelung unter den Modulen anordnen zu können.

Die Klemmeinheit wird hierbei so an der Stützplatte festgelegt, dass die Klemmeinheit im an der Stützplatte festgelegten Zustand zumindest teilweise über die Grundplatte ragt, wie dies einer bevorzugten Ausführungsform der vorliegenden Erfindung entspricht. Dies bedeutet, dass die Klemmeinheit in den von den zueinander abgewinkelten Grund- und Stützplatten aufgespannten Raum weisend an der Stützplatte festgelegt wird. Auf diese Weise bietet die erfindungsgemäße Befestigungsvorrichtung im Querschnitt im Wesentlichen eine C-förmige Konfiguration von der Klemmeinheit über die Stützplatte zur Grundplatte aus, sodass eine überaus kompakte Art der Befestigung und eine optimierte Ableitung von senkrecht- und dachparallel wirkenden Kräften in den Untergrund erfolgt.

Gemäß einer bevorzugten Ausführungsform der vorliegenden Erfindung ist die Klemmeinheit durch zumindest eine die Stützplatte durchsetzende und in ein Gewinde der ersten Klemmbacke eingreifende Befestigungsschraube mit der Stützplatte verspannbar. Dies stellt eine einfache Art der Festlegung der Klemmeinheit an der Stützplatte dar, die mit einfachen Werkzeugen wie Schraubendrehern erfolgen kann. Selbstverständlich ist diese Art der Festlegung so zu verstehen, dass sich die Befestigungsschraube mit ihrem Schraubenkopf an der Stützplatte abstützt.

Um eine verbesserte und insbesondere rutschfeste Festlegung der Klemmeinheit an der Stützplatte zu erreichen, ist die vorliegende Erfindung bevorzugt dahingehend weitergebildet, dass die Stützplatte und die erste Klemmbacke miteinander zusammenwirkende Rippen aufweisen. Wenn nun die Klemmeinheit beispielsweise durch die Wirkung der Befestigungsschraube gegen die Stützplatte verspannt wird, geraten die Rippen an der Stützplatte und der ersten Klemmbacke miteinander in Eingriff, sodass eine ungewollte Verschiebung der Klemmeinheit relativ zur Stützplatte praktisch nicht mehr erfolgen kann.

In ähnlicher Weise ist die erfindungsgemäße Befestigungsvorrichtung zur Betätigung der Klemmbacken vorzugsweise dahingehend ausgebildet, dass die Klemmbacken durch eine in ein Gewinde der zweiten Klemmbacke eingreifende Spannschraube zueinander verschiebbar und gegeneinander verspannbar sind. Mit anderen Worten greift das Gewinde der Spannschraube in die zweite Klemmbacke ein, jedoch nicht in die erste Klemmbacke, sodass beim Verdrehen der Spannschraube eine relative Verschiebung der zweiten Klemmbacke in Richtung der ersten Klemmbacke erfolgt, wodurch die Profilstange von der Klemmeinheit festgeklemmt werden kann.

Um die zweite Klemmbacke beim Verspannen in Bezug auf die erste Klemmbacke nicht festhalten zu müssen, können die Klemmbacken drehfest zueinander geführt sein, wie dies einer bevorzugten Ausführungsform der vorliegenden Erfindung entspricht. Die Spannschraube und die Klemmbacken bilden somit eine Art Spindelantrieb aus, der für eine Relativbewegung der Klemmbacken zueinander oder voneinander weg sorgt, sodass durch das Betätigen einer einzigen Spannschraube die Klemmeinheit durch Verspannungen an der Profilstange eines Photovoltaik-Moduls festgelegt werden kann.

Insbesondere dann, wenn Photovoltaik-Module auf bereits bestehenden Dachflächen montiert werden sollen, ist es in der Regel notwendig, für einen Höhenausgleich bei der Montage der Module sorgen zu können, um mögliche Unebenheiten der Dachfläche auszugleichen. Gemäß einer bevorzugten Ausführungsform der vorliegenden Erfindung ist es daher vorgesehen, dass die Befestigungsschraube ein Langloch der Stützplatte durchsetzt, wobei das Langloch zur Ebene der Grundplatte rechtwinkelig, bevorzugt senkrecht, verläuft. Auf diese Weise kann die Klemmeinheit vor ihrer endgültigen Festlegung an der Stützplatte in der Höhenrichtung verstellt werden, um benachbarte Photovoltaik-Module bündig nebeneinander anordnen zu können. Wenn, wie dies bevorzugt ist, dass Langloch nicht nur rechtwinkelig, sondern sogar senkrecht zur Ebene der Grundplatte verläuft, erfolgt beim Einstellen der Höhenlage der Klemmeinheit über die Grundplatte keine Verschiebung der Klemmeinheit und damit des Moduls in Richtung der Ebene der Grundplatte, sodass der beispielsweise durch Bohrungen im Untergrund festgelegte seitliche Abstand der Module zueinander gewahrt bleibt.

Bevorzugt durchsetzt auch die Spannschraube das Langloch, wobei hier die Spannschraube bevorzugt auch mit ihrem Schraubenkopf mit dem Rand des Langlochs zusammenwirkt, sodass auch die Spannschraube, die grundsätzlich zum Betätigen der Klemmbacken vorgesehen ist, zusätzlich zur Befestigungsschraube zur Festlegung und Stabilisierung der Klemmeinheit an der Stützplatte beiträgt. Hierdurch erfolgt trotz der nur einseitigen Festlegung der Klemmeinheit an der Stützplatte eine robuste Übertragung von Momenten, sodass die erfindungsgemäße Befestigungsvorrichtung eine über lange Zeit zuverlässige Festlegung der Module auf Dachflächen ohne das Risiko von vorzeitigen Materialermüdungen gestattet.

Im Sinne einer weiteren Stabilisierung der Festlegung der Klemmeinheit an der Stützplatte und im Sinne einer optimierten Lastverteilung und Momentenaufnahme zwischen der Klemmeinheit und der Stützplatte kann gemäß einer bevorzugten Ausführungsform der vorliegenden Erfindung die erste Klemmbacke einen bis in den Bereich der Spannschraube reichenden Auflagewulst zur Auflage an der Stützplatte ausbilden, wobei bevorzugt die Spannschraube eine Aushöhlung im Auflagewulst durchsetzt. Der Auflagewulst bietet hierbei eine vergrößerte Auflagefläche zwischen der Klemmeinheit und der Stützplatte aus. Die Aushöhlung im Auflagewulst wiederum verringert den Materialbedarf der erfindungsgemäßen Befestigungsvorrichtung und reduziert auf diese Weise auch das Gewicht der Vorrichtung.

Gemäß einer bevorzugten Ausführungsform der vorliegenden Erfindung bilden die Klemmbacken auskragende Leisten zum Eingriff in ein Profil einer Profilstange aus, wobei die Leisten im Querschnitt zahnartige Vorsprünge ausbilden können, die entsprechend dem Querschnitt des Profils der mit der erfindungsgemäßen Befestigungsvorrichtung festzulegenden Profilstangen ausgebildet sein können.

Die erfindungsgemäße Vorrichtung zur Befestigung vom Profilstangen soll für die einfache Montage von Photovoltaik-Modulen auf einem Dach ermöglichen. Hierbei soll sichergestellt sein, dass beim Entnehmen einer erfindungsgemäßen Befestigungsvorrichtung aus einem entsprechenden Behälter keine Teile abfallen. Dies gilt vor allem für die Schrauben, weshalb diese bevorzugt mit entsprechenden Verliersicherung gegen Verlieren gesichert sind. Um jedoch keine unnötig vorstehenden Teile an der erfindungsgemäßen Befestigungsvorrichtung zu schaffen, ist die Erfindung gemäß einer bevorzugten Ausführungsform dahingehend weitergebildet, dass das Stützelement im Bereich um das Langloch und/oder im Bereich um ein Loch durch die Grundplatte für den Durchtritt einer Schraube Einsenkungen zur Aufnahme einer Verliersicherung, bevorzugt in Form einer Doppelbeilagscheibe aufweist. Dies ist insbesondere im Bereich eines Lochs durch die Grundplatte nützlich, da die Grundplatte in der Regel flach auf dem Untergrund beziehungsweise auf einem Zwischenteil zwischen Grundplatte und Untergrund beispielsweise in Form eines Tellerfußes aufliegen soll, was durch eine an der Unterseite der Grundplatte an der entsprechenden Schraube festgelegte Verliersicherung beziehungsweise Doppelbeilagscheibe stark beeinträchtigt wäre.

Die Erfindung wird nachfolgend anhand eines in der Zeichnung dargestellten Ausführungsbeispiels näher erläutert. In dieser zeigen Figur 1 eine perspektivische Darstellung der erfindungsgemäßen Befestigungsvorrichtung, Figur 2 eine Seitenansicht, Figur 3 eine Ansicht der Stützplatte und der Schraubenköpfe der Befestigungsschraube und der Spannschraube und Figur 4 eine perspektivische Ansicht der Befestigungsvorrichtung von unten.

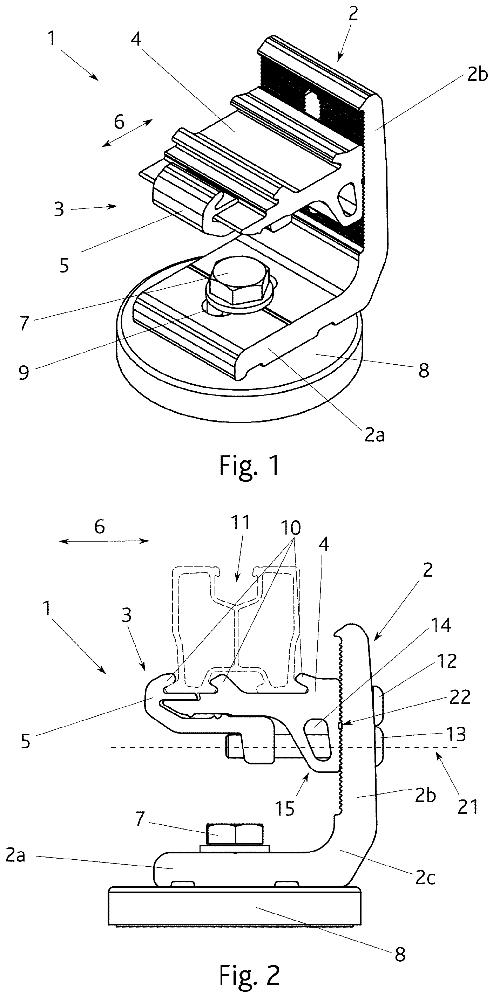

In Figur 1 ist die erfindungsgemäße Befestigungsvorrichtung mit dem Bezugszeichen 1 bezeichnet. Die Befestigungsvorrichtung 1 besteht im Wesentlichen aus einem Stützelement 2, an dem eine Klemmeinheit 3 festgelegt ist. Die Klemmeinheit 3 umfasst eine erste Klemmbacke 4 und eine zweite Klemmbacke 5 die in Richtung des Doppelpfeils 6 relativ zueinander verschiebbar sind und gegeneinander verspannt werden können. Das Stützelement 2 ist mit einer Schraube 7 am Untergrund, in diesem Fall an einem Tellerfuß 8 festgelegt, wofür ein Langloch 9 in der Grundplatte 2a des Stützelemente 2 vorgesehen ist. Im Wesentlichen rechtwinklig zur Grundplatte 2a des Stützelements 2 ist die Stützplatte 2b des Stützelements 2 angeordnet, wobei das Stützelement 2 ein gefrästes Aluminium-Bauteil ist.

In der Seitenansicht gemäß der Figur 2 ist zu erkennen, dass die Grundplatte 2a und die Stützplatte 2b des Stützelements 2 im Wesentlichen im rechten Winkel zueinander stehen, wobei ein zur Aufnahme von Lasten optimierter Übergangsbereich 2c ausgebildet ist. Die Klemmeinheit 3 umfasst die Klemmbacken 4 und 5, die zahnartig vorspringende Leisten 10 ausbilden, die mit einem Profil einer Profilstange 11 formschlüssig zusammenwirken, wenn die Klemmbacken 4 und 5 im zusammengeschobenen und verspannten Zustand sind, wie dies in Figur 2 dargestellt ist. Die Festlegung der Klemmeinheit 3 an der Stützplatte 2 erfolgt über eine Befestigungsschraube 12, die in ein Gewinde in der ersten Klemmbacke 4 eingreift und die die Stützplatte 2b durchsetzt. Die Verspannung der Klemmeinheit 3 wiederum erfolgt durch die Spannschraube 13, die in ein Gewinde in der zweiten Klemmbacke 5 eingreift und eine Aushöhlung 14 in einem Auflagewulst 15 der ersten Klemmbacke 4 durchsetzt, ohne mit dem Auflagewulst 15 in Eingriff zu stehen. Die gemeinsame Achse, entlang der die Klemmbacken 4 und 5 relativ zueinander verschiebbar und gegeneinander verspannbar sind, ist mit dem Bezugszeichen 21 bezeichnet.

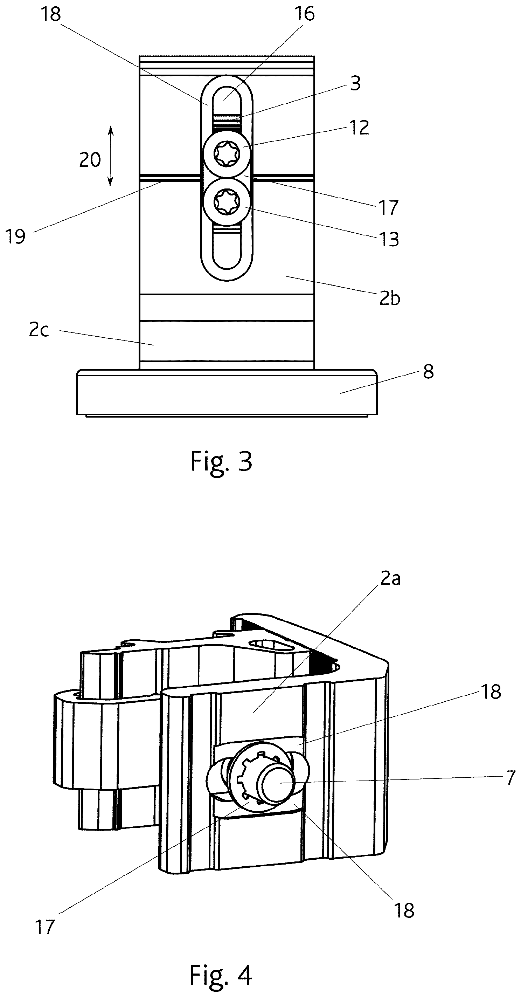

Die Ansicht der Figur 3 lässt erkennen, dass die Befestigungsschraube 12 und die Spannschraube 13 in einem Langloch 16 geführt sind, wodurch eine Höhenverstellung der Klemmeinheit 3 im Sinne des Doppelpfeils 20 erfolgen kann, um die Klemmeinheit 3 entsprechend in der Höhe zu positionieren. Mit dem Bezugszeichen 22 sind Mittelmarkierungen in den Rippenplatten der Stützplatte 2b und der ersten Klemmbacke 4 bezeichnet, die das Ausrichten der Klemmeinheit 3 auf der Stützeinheit 2 in der Höhenrichtung des Doppelpfeils 20 in einer neutralen Mittelstellung erleichtern. Die Schrauben 12 und 13 sind gegen Verlieren durch eine Verliersicherung 17 in Form einer Doppelbeilagscheibe in dem Langloch 16 gesichert, wobei die Verliersicherung beziehungsweise Doppelbeilagscheibe in einer entsprechenden Einsenkung 18 aufgenommen ist. Die Verwendung der Doppelbeilagscheibe dient auch dazu, die Spannkraft der Schrauben 12 und 13 besser in die Einsenkung 18 einbringen zu können. Mit dem Bezugszeichen 19 ist eine Mittelmarkierung an der Außenseite der Stützplatte 2b bezeichnet, die es erleichtern soll, eine neutrale Höheneinstellung der Klemmeinheit in der Stützplatte 2b in der Richtung des Doppelpfeils 20 zu realisieren.

In gleicher Weise lässt die Ansicht gemäß der Figur 4 erkennen, dass auch die Schraube 7 in der Grundplatte 2a durch eine Verliersicherung 17 gesichert ist, wobei die Verliersicherung 17 in einer entsprechenden Einsenkung 18 aufgenommen ist.

## Patentansprüche

1. Befestigungsvorrichtung (1) zum Festlegen einer Profilstange (11) an einem Untergrund, die Befestigungsvorrichtung (1) zumindest umfassend eine Klemmeinheit (3) mit einer ersten Klemmbacke (4) und einer zweiten Klemmbacke (5), die entlang einer gemeinsamen Achse (21) relativ zueinander verschiebbar und gegeneinander verspannbar sind, und ein am Untergrund festlegbares Stützelement (2), an dem die Klemmeinheit (3) festlegbar ist.

2. Befestigungsvorrichtung nach Anspruch 1, **dadurch gekennzeichnet, dass** das Stützelement (2) eine am Untergrund festlegbare, bevorzugt mit dem Untergrund verschraubbare, Grundplatte (2a) und eine zur Ebene der Grundplatte (2a) abgewinkelte, und bevorzugt einteilig mit der Grundplatte (2a) ausgebildete, Stützplatte (2b) umfasst, wobei die Klemmeinheit (3) an der Stützplatte (2b) festlegbar ist.

3. Befestigungsvorrichtung nach Anspruch 2, **dadurch gekennzeichnet, dass** die Klemmeinheit (3) im an der Stützplatte (2b) festgelegten Zustand zumindest teilweise über die Grundplatte (2a) ragt.

4. Befestigungsvorrichtung nach Anspruch 2 oder 3, **dadurch gekennzeichnet, dass** die Klemmeinheit (3) durch zumindest eine die Stützplatte (2b) durchsetzende und in ein Gewinde der ersten Klemmbacke (4) eingreifende Befestigungsschraube (12) mit der Stützplatte (2b) verspannbar ist.

5. Befestigungsvorrichtung nach einem der Ansprüche 2 bis 4, **dadurch gekennzeichnet, dass** die Stützplatte (2b) und die erste Klemmbacke (4) miteinander zusammenwirkende Rippen aufweisen.

6. Befestigungsvorrichtung nach einem der Ansprüche 1 bis 5, **dadurch gekennzeichnet, dass** die Klemmbacken (4, 5) durch eine in ein Gewinde der zweiten Klemmbacke (5) eingreifende Spannschraube (13) zueinander verschiebbar und gegeneinander verspannbar sind.

7. Befestigungsvorrichtung nach einem der Ansprüche 1 bis 6, **dadurch gekennzeichnet, dass** die Klemmbacken (4, 5) drehfest zueinander geführt sind.

8. Befestigungsvorrichtung nach einem der Ansprüche 4 bis 7, **dadurch gekennzeichnet, dass** die Befestigungsschraube (12) ein Langloch (16) der Stützplatte (2b) durchsetzt, wobei das Langloch (16) zur Ebene der Grundplatte (2a) rechtwinkelig, bevorzugt senkrecht, verläuft.

9. Befestigungsvorrichtung nach Anspruch 8, **dadurch gekennzeichnet, dass** die Spannschraube (13) das Langloch (16) durchsetzt.

10. Befestigungsvorrichtung nach einem der Ansprüche 6 bis 9, **dadurch gekennzeichnet, dass** die erste Klemmbacke (4) einen bis in den Bereich der Spannschraube (13) reichenden Auflagewulst (15) zur Auflage an der Stützplatte (2b) ausbildet, wobei bevorzugt die Spannschraube (13) eine Aushöhlung (14) im Auflagewulst (15) durchsetzt.

11. Befestigungsvorrichtung nach einem der Ansprüche 1 bis 10, **dadurch gekennzeichnet, dass** die Klemmbacken (4, 5) auskragende Leisten (10) zum Eingriff in ein Profil einer Profilstange (11) ausbilden.

12. Befestigungsvorrichtung nach einem der Ansprüche 8 bis 11, **dadurch gekennzeichnet, dass** das Stützelement (2) im Bereich um das Langloch (16) und/oder im Bereich um ein Loch (9) durch die Grundplatte (2a) für den Durchtritt einer Schraube (7) Einsenkungen (18) zur Aufnahme einer Verliersicherung (17), bevorzugt in Form einer Doppelbeilagscheibe, aufweist.

13. Anordnung von Photovoltaikmodulen auf einem Dach, umfassend eine Mehrzahl von am Dach befestigten Befestigungsvorrichtungen (1) nach einem der Ansprüche 1 bis 12, deren Klemmbacken (4, 5) eine Vielzahl von parallel zueinander verlaufenden Profilstangen (11) klemmend festhalten, wobei an den Profilstangen (11) Photovoltaikmodule befestigt sind.
